# EUROPEAN PATENT APPLICATION

(11) **EP 0 521 536 A1**
(43) Date of publication of application: **07.01.1993**
(21) Application number: 92115723.6
(22) Date of filing: 25.10.1988
(51) Int. Cl.: H02G 3/06, H02G 3/04

(54) **Improvements relating to risers for cable tray systems**

(30) Priority: 03.11.1987 GB 8725677
(62) Divisional of application: 88117711.7
(71) Applicant: SWIFTS OF SCARBOROUGH LIMITED, Eastfield Scarborough YO11 3BY (GB)
(72) Inventor: Gregory, Edwin Stuart, Scarborough (GB)
(74) Representative: Denmark, James

(57) **Abstract**

A riser for a cable tray system comprises a sheet metal blank folded to define a curved base plate (50) from opposite sides of which extend side walls (52) made up of separate sections (54) the sections (54) are reinforced and connected by strips (58, 60) which lie transverse to the sections (54) and are spot welded thereto. The strips (58, 60) extend beyond the ends of the walls (52) to define connection tongues (62, 64) enabling the riser to be connected to other components of the system.

## Description

This invention relates to risers for cable tray systems, which system comprises cable trays which are for holding electrical cables and/or service pipes or the like when installed in buildings, and/or underground, said accessories serving to connect cable tray ends where a change in direction and/or width is required.

Cable trays comprise essentially elongated shallow channel members and the accessories are also of channel cross section and comprise for example T pieces, reducers, bends, risers and cross pieces, and as their names suggest, provide for connection between channel members which lie at right angles, which are of differing width, and where the cables or pipes must travel between higher and lower levels.

The cable trays and accessories are provided with apertures therein to enable the strapping of the cables and pipes thereto by passing clamps and/or ties or straps through the apertures and round the cables and pipes.

Cable tray system risers have in the past been formed from sheet metal blanks, which are folded to define a curved base plate with side walls at opposite sides of the base plate. Because the base plate is curved, the side walls have been formed on separate sections extending from the base plate and in the case of "external" risers (where the cables or the like are supported on the outside or convex side of the riser base plate) when the wall sections are bent relative to the base plate, there arise gaps between the sections, which have in the past been closed by metallic inserts suitably shaped and welded in position.

When the riser is an "internal" riser (wherein the cables or the like are supported on the inside or concave side on the riser base plate) the said wall sections do not require any inserts, but have in the past been welded together.

The welding or inserts and welding together of the wall sections is difficult to perform and the present invention overcomes this difficulty.

According to the present invention there is provided a riser for a cable tray system which is formed from a sheet material blank folded to define a curved base plate and side walls made up of a plurality of sections extending from opposite sides of the base plate, characterised by reinforcing strips connecting said wall sections.

Preferably, the reinforcing strips are spot welded to said sections.

Preferably also, the reinforcing strips extend beyond the ends of said side walls to define extension tongues for the coupling of the riser to other components or the cable tray system; the tongues may have elongated connection apertures.

Embodiments of the invention will now be described, by way of example, with reference to the accompanying drawings, wherein:-
Figs. 1 and 2 are perspective views of conventional outer and inner risers;
Figs. 3 and 4 are perspective views of outer and inner risers according to one embodiment of the invention;
Figs. 5 and 6 are perspective views of outer and inner risers according to another embodiment of the invention;
Fig. 7 illustrates how two risers respectively as shown in Figs. 4 and 5 can be coupled end to end to form an inner/outer accessory assembly; and
Figs. 8 to 11 are side views of respective risers for coupling cable trays at 90^{o}, 77.5^{o}, 45^{o} and 22.5^{o}.

Cable tray accessories in general are for connecting elongated cable trays of the non-return flange type and of the return flange type.

Each of these cable trays is provided with a base and side walls, and in the case of the non-return flange type cable trays, the side walls are single walls, whilst in the case of the return flange type, the walls are double walls. The bases of the trays are provided with apertures normally in the form of rows of slots, the slots lying transverse to th length direction of the tray, but the rows extending lengthwise of such tray, and being staggered in alternate rows so as to provide over the entire face of the base a pattern of coupling apertures through which ties and clamps can be passed in order to anchor cables or pipes in the cable trays to said bases.

When the cables or pipes have to pass from one level to another, accessories known as risers are used.

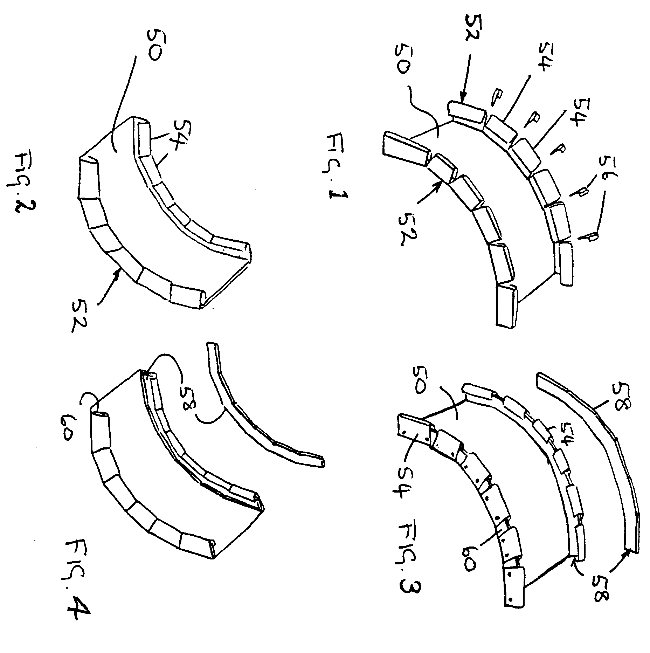

Figs. 1 to 5 show riser accessories for connecting cable trays to enable cables to rise or fall from one level to another. Risers are of two types namely external risers and internal risers. Figs. 1, 3 and 5 show external risers, whilst Figs. 2, 4 and 6 show internal risers. A riser is essentially a curved tray subtending an angle, usually 90^{o}, and is provided with a curved base with side walls thereon.

If the side walls extend away from the centre of a curvature of the base as in Figs. 1, 3 and 5, the cables are supported on the exterior of the base and therefore the risers are referred to as external risers, whilst if as in the case of Figs. 2, 4 and 6, the side walls extend inwardly towards the centre of curvature of the base, the risers are referred to as internal risers.

The risers shown in Figs. 1 and 2 are of conventional design, and the base 50 thereof comprises a plurality of sections which lie at an angle to each other, but the combined sections forming substantially a curved surface. The walls 52 are formed by folding wall sections 54 at right angles to the base 50. The risers shown in Figs. 1 and 2 are of the return flange type, and the walls 52 are formed by folding said wall section 54 relative to the base. In the base of the external riser shwon in Fig. 1, the gaps created by folding said sections 54, are closed by metallic inserts 56, suitably shaped and welded in position, the inserts having the effect of rendering the said walls 52 continuous. In the case of the internal riser in Fig. 2, the utilisation of inserts is of course not necessary, as the sections 54 are shaped so that when they are folded to the position shown in Fig. 2, the edges of the inserts butt together and are welded.

The utilisation of inserts or the welding together of the sections 54 in the arrangement shown in Fig. 2 is difficult to perform, and a first riser design according to the invention as shown in Figs 3 and 4 overcomes this difficulty insofar as reinforcing strips 58 and 60 are utilised in the walls 52. The walls are still essentially formed by the sections 54, but the sections 54 are formed around the insert strips 58 and 60, and are welded thereto. In the case of the external risers shown in Fig. 3, the strips 58 and 60 bridge the gaps between the sections 54, whereas in the arrangement shwon in Fig. 4, the strips 58 and 60 form a reinforcement means, and also a means whereby the extension 54 can be readily welded to the strips 58 and 60. In each case the strips reinforce the walls 52.

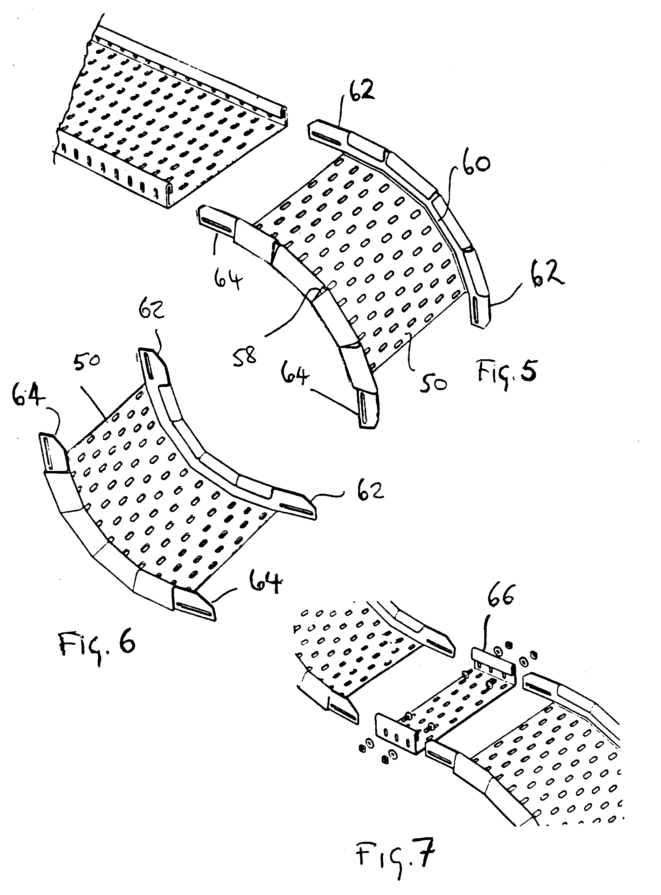

The risers shown in Figs. 5 and 6 are essentially similar to those shown in Figs. 3 and 4 except that the reinforcing strips 58 and 60 are provided with extensions or overhangs 62, 64 forming tongues so that these overhangs extends beyond the ends of the base 50 and walls 52 at each end of the base. These overhangs 62 and 64 form connection pieces which are of course integral with the riser, and can lie between the wall portions of return flange cable trays when coupled thereto. Slots in the overhang portions 62, 64 enable these portions to be bolted or screwed to the cable trays.

Fish plate extensions can be formed integral with or welded to the ends of the base 50 so as to provide support and connecting plates to the base section 50, for the purpose as described herein. The fish plate sections may be welded to the undersides of the bases 50. Figs. 5 and 6 illustrate an aperture pattern provided in the base sections 50, and Fig. 5 also illustrates the end of a cable tray positioned for connection to the adjacent end of the riser.

Fig. 7 illustrates how a U-sectioned coupling cable tray section 66 of the return flange type can, by the use of bolts and nuts, be used to couple the ends of two risers to provide an accessory assembly for providing an S-bend in a vertical plane.

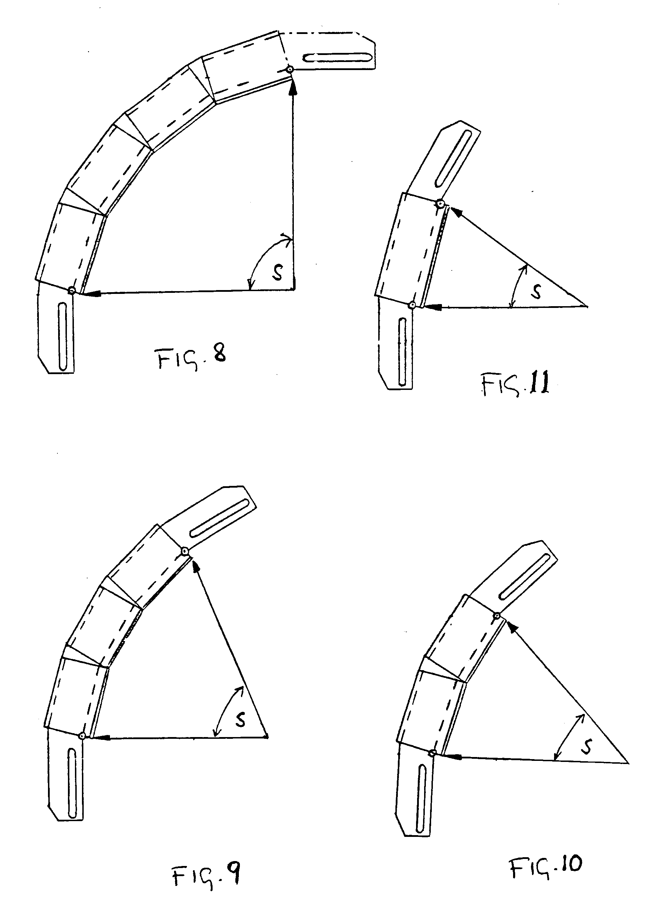

Figs. 8 to 11 show risers, which are external risers, but enabling the deflecting of the cables and pipes in a vertical plane through angles from 90^{o} to 22.5^{o} respectively in equal 22.5^{o} steps. The riser of Fig. 8 corresponds to the riser of Fig. 5 and the subtended angle of the riser S is 90^{o}. The subtended angle S of the riser of Fig. 22 is 77.5^{o}, the subtended angle of riser 23 is 45^{o}, and the subtended angle S of the riser of Fig. 24 is 22.5^{o}.

The accessories described and illustrated herein preferably are constructed from sheet metal stampings of appropriate profile and formed to shape by appropriate folding and pressing as described, but it is not necessary that sheet metal be used as other materials of equivalent characteristics can be utilised if desired.

## Claims

1. A riser for a cable tray system which is formed from a sheet material blank folded to define a curved base plate (50) and side walls 52 made up of a plurality of sections (54) extending from opposite sides of the base plate (50) characterised by reinforcing strips (58, 60) connecting said wall sections (54).

2. A riser according to Claim 1, characterised in that said reinforcing strips (58, 60) are spot welded to said sections (54).

3. A riser according to Claim 1 or 2, characterised in that said reinforcing strips (58, 60) extend beyond the ends of said side walls (52) to define extension tongues (62,64) for the coupling of the riser to other components of the cable tray system.

4. A riser according to Claim 3, characterised in that said tongues (62, 64) have elongated connection apertures.

5. A riser according to any one of the preceeding claims, characterised in that the said wall sections (54) are folded so as to be of double thickness and the said strips (58, 60) lie between the thicknesses of each section (54).
